# FASCICULE DE BREVET EUROPEEN

(11) **EP 0 603 037 B1**
(45) Date de publication et mention de la délivrance du brevet: **09.04.1997**
(21) Numéro de dépôt: 93402986.9
(22) Date de dépôt: 10.12.1993
(51) Int. Cl.: G21C 21/02

(54) **Dispositif de dépoussiérage de pastilles de combustible nucléaire**
Entstaubungsanlage für Kernbrennstofftabletten
Dusting arrangement for nuclear fuel pellets

(30) Priorité: 14.12.1992 FR 9215026
(43) Date de publication de la demande: 22.06.1994
(73) Titulaire: COMMISSARIAT A L'ENERGIE ATOMIQUE, 75015 Paris (FR)
(72) Inventeur: Bouretz, Jean-Marie, F-04100 Manosque (FR); Bernard, Hervé, F-13100 Aix-en-Provence (FR)
(74) Mandataire: Dubois-Chabert, Guy

(56) Documents cités:
- EP-A- 0 183 979
- DD-A- 144 472
- DD-A- 300 720
- FR-A- 2 174 631
- FR-A- 2 577 065
- US-A- 4 070 240

## Description

La présente invention concerne un dispositif de dépoussiérage de pastilles de combustible nucléaire, permettant de retirer sans frottement mécanique, des particules ou des poussières de combustible nucléaire, plus ou moins adhérentes à la surface extérieure de ces pastilles.

Ce dispositif est destiné à être utilisé dans un poste de travail où l'on trie des pastilles de combustible en céramique, selon des critères d'aspect tels que la présence de défauts superficiels ou des manques de matière locaux et où l'on effectue des mesures géométriques précises telles que la mesure du diamètre ou de la hauteur de ces pastilles de combustible. Cette métrologie et ce tri d'aspect sont généralement automatisés et sont alors réalisés par des méthodes utilisant des lasers. Or, la présence de poussières sur ces pastilles de combustible génère des défauts aberrants qu'il convient d'éliminer. En conséquence, il est souhaitable de dépoussiérer ces pastilles.

En outre, si l'on ne prend pas de précautions particulières lors de l'engainage des pastilles de combustibles dans leur tube de gaine, les poussières adhérentes à la surface extérieure des pastilles risquent d'être remises en suspension dans l'atmosphère ambiante et de contaminer l'extérieur du tube ou le voisinage immédiat de l'orifice d'entrée.

On connaît déjà d'après l'art antérieur divers dispositifs de dépoussiérage.

On connaît d'après le document FR-A-2 379 886, un système de confinement étanche pour un réacteur nucléaire, permettant d'assembler des éléments combustibles nucléaires et notamment de remplir ceux-ci de pastilles de combustible. Un tel système comprend une pluralité de stations d'assemblage des éléments combustibles, c'est-à-dire notamment un appareil de chargement des pastilles à l'intérieur des éléments combustibles, une station d'insertion de bouchons et un appareillage de soudage de ces bouchons. En outre, ce dispositif comprend des moyens de transport reliant entre elles les diverses stations d'assemblage. Enfin, ces stations d'assemblage sont agencées le long d'un corps de fermeture étanche et débouchent à l'intérieur de celui-ci. Par ailleurs, les extrémités des éléments combustibles débouchent également dans ce corps de fermeture étanche. Ce dernier comprend un dispositif d'étanchéité électrostatique.

Selon cette invention, ce dispositif d'étanchéité électrostatique inclut un dispositif de dépoussiérage par champ électrostatique. Ce dispositif de dépoussiérage comprend une chambre à l'intérieur de laquelle circule l'élément combustible, cette chambre étant munie de deux cellules de précipitation placées de part et d'autre du trajet de l'élément combustible. Chacune de ces cellules de précipitation est une boîte rectangulaire comprenant une série de barres métalliques constituant un bouclier protecteur et derrière lesquelles est placée une électrode. Une haute tension continue est appliquée à cette électrode, de façon à créer une décharge à effet de couronne. Toutes les particules de matière portées dans l'air circulant autour de l'élément combustible sont alors chargées électrostatiquement et attirées vers les cellules de précipitation. De ce fait, elles sont soustraites au courant d'air principal.

Toutefois, ce dispositif présente plusieurs inconvénients. Il nécessite notamment la présence de haute tension dans les enceintes de confinement, ce qui est gênant car il y a un risque de création d'arcs électriques.

De plus, il ne permet de retirer que des particules fines et chargées électriquement.

Par ailleurs, on connaît également un dispositif de dépoussiérage de pastilles de combustible nucléaire mis au point par la Société BELGONUCLEAIRE utilisant d'une part, un système de jet d'air forcé dirigé perpendiculairement à la paroi périphérique cylindrique de la pastille et d'autre part, un système d'aspiration appliqué à un train de pastilles en déplacement à l'intérieur d'un ressort hélicoïdal situé dans une enceinte maintenue en dépression.

Ce dispositif n'est pas satisfaisante et ne permet pas d'obtenir un dépoussiérage correct. En effet, il a tendance à plaquer certaines poussières contre la surface de la pastille plutôt que de les enlever.

L'invention a donc pour but de résoudre les inconvénients précédemment cités et de mettre au point un dispositif de dépoussiérage efficace.

A cet effet, l'invention concerne un dispositif de dépoussiérage de pastilles de combustible nucléaire comprenant un tube de dépoussiérage à l'intérieur duquel circulent lesdites pastilles.

Selon les caractéristiques de l'invention, ce tube de dépoussiérage est muni à son extrémité d'entrée d'un orifice d'injection de gaz, d'une ouverture d'introduction des pastilles à dépoussiérer et de moyens pour créer un flux de gaz laminaire de dépoussiérage, d'une vitesse d'au moins 25 m/s, autour des pastilles circulant dans ledit tube, ce flux de gaz étant parallèle et de même sens que le sens de déplacement desdites pastilles, ledit tube de dépoussiérage étant en outre muni à son extrémité de sortie d'un orifice d'aspiration du gaz et des poussières et d'une ouverture de récupération des pastilles dépoussiérées.

Du fait que le flux d'air est parallèle au sens de déplacement des pastilles, les poussières ne sont plus plaquées sur lesdites pastilles et elles sont facilement éliminées.

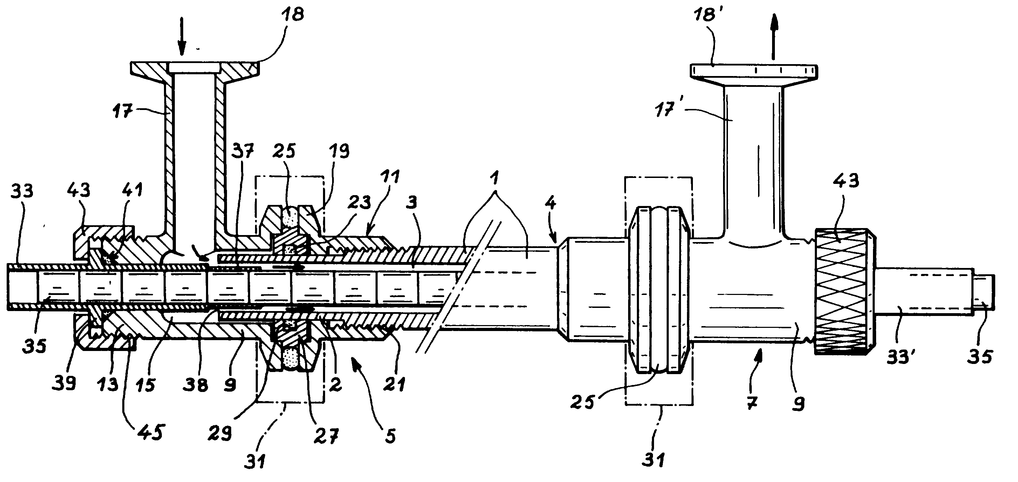

L'invention sera mieux comprise à la lecture de la description suivante d'un mode de réalisation de l'invention, donné à titre d'exemple illustratif et non limitatif, cette description étant faite en faisant référence à la figure 1 jointe qui représente une vue en coupe partielle du dispositif de dépoussiérage selon l'invention.

Ce dispositif de dépoussiérage comprend un tube de dépoussiérage 1 à l'intérieur duquel circulent les pastilles de combustible nucléaire. Ce tube 1 est usiné intérieurement de façon à présenter une série de cannelures hélicoïdales 3 s'étendant sur toute sa longueur. De préférence, ce tube de dépoussiérage 1 comprend au moins quatre cannelures et mieux encore, six. Le diamètre interne de ce tube de dépoussiérage 1 est très légèrement supérieur à celui des pastilles de combustible, cylindriques, qui y circulent.

Ce tube de dépoussiérage 1 est muni à son extrémité d'entrée 2 et à son extrémité de sortie 4 respectivement d'un embout d'entrée 5 et d'un embout de sortie 7. Sur la figure 1, seul l'embout d'entrée 5 est représenté en coupe, mais l'embout de sortie 7 présente une structure identique, avec toutefois des fonctions légèrement différentes. Les éléments communs aux deux embouts et assurant les mêmes fonctions portent les mêmes références. En revanche, les éléments de l'embout de sortie 7 assurant les fonctions différentes de celles de l'embout d'entrée 5 portent des références identiques mais majorées d'un signe "prime".

L'embout d'entrée 5 se compose principalement d'un manchon cylindrique 9 dont l'une des extrémités 11 est fixée à l'extrémité d'entrée 2 du tube 1 et dont l'autre extrémité 13 permet l'introduction des pastilles.

Ce manchon cylindrique 9 définit intérieurement une chambre d'injection de gaz 15. En outre, ce manchon 9 comprend un conduit d'injection de gaz 17 débouchant dans la chambre d'injection 15 sensiblement perpendiculairement à l'axe du tube 1 de dépoussiérage. Ce conduit d'injection peut être rapporté par soudage ou venu de matière avec le manchon 9 comme représenté sur la figure 1. A cet effet, on notera que le tube 1 et les embouts d'entrée 5 et de sortie 7 sont réalisés en acier inoxydable. Le conduit d'injection de gaz 17 présente à son extrémité libre une bride de fixation 18. De façon similaire, le manchon cylindrique 9 de l'embout de sortie 7 comprend une chambre de collecte de gaz. En outre, le conduit 17' prévu dans l'embout de sortie 7 permet l'aspiration du gaz et des poussières arrachées de la surface des pastilles.

Le manchon cylindrique 9 est rendu solidaire du tube de dépoussiérage 1, grâce à un raccord à bride 19 se vissant sur une zone filetée 21 annulaire du tube de dépoussiérage 1, prévue à cet effet. L'étanchéité entre le manchon cylindrique 9 et le raccord à bride 19 est assurée par un premier joint d'étanchéité 23 et par un deuxième joint d'étanchéité 25. Le premier joint d'étanchéité 23 est maintenu contre la face extérieure du tube de dépoussiérage 1, par une pièce de maintien 27 présentant une gorge en U 29 destinée à recevoir ledit joint 23. En outre, le manchon cylindrique 9 est assemblé avec le raccord à bride 19 grâce à un raccord annulaire 31, par exemple un raccord du type "pneurope".

Le dispositif de dépoussiérage comprend en outre un tube 33 d'introduction des pastilles 35. Ce tube 33 d'introduction des pastilles pénètre à l'intérieur du manchon cylindrique 9, coaxialement à celui-ci et présente à cet effet une extrémité d'introduction 37 dont l'épaisseur est moindre que celle du reste du tube 33. Cette extrémité d'introduction 37 pénètre sur une faible longueur à l'entrée du tube de dépoussiérage 1 de façon à définir avec celui-ci un passage annulaire 38 d'introduction de gaz. En outre, ce tube d'introduction 33 de pastilles présente sensiblement au milieu de sa partie de plus grande épaisseur et sur la surface extérieure de celle-ci, un anneau 39 formant saillie. Cette saillie 39 forme une butée et le tube d'introduction de pastilles 33 est enfoncé à l'intérieur du manchon cylindrique 9 jusqu'à ce que la saillie 39 vienne en butée contre l'extrémité libre dudit manchon cylindrique 9. Afin d'assurer l'étanchéité entre ces deux pièces, on prévoit au niveau de cette surface de jonction, un joint d'étanchéité annulaire 41. La fixation du tube 33 d'introduction de pastilles à l'intérieur du manchon cylindrique 9 est assurée par une bague d'extrémité 43 vissée sur une zone annulaire filetée 45 prévue à cet effet sur l'extrémité 13 du manchon cylindrique 9. De façon similaire, le tube 33' prévu dans l'embout de sortie 7 permet la récupération des pastilles après leur dépoussiérage et présente un passage annulaire d'aspiration de gaz.

On notera que le tube d'introduction 33 des pastilles et le tube de dépoussiérage 1 ont un diamètre intérieur sensiblement égal au diamètre intérieur des gaines dans lesquelles les pastilles de combustible sont introduites ultérieurement après l'étape de dépoussiérage.

Le conduit d'aspiration d'air 17' est relié par l'intermédiaire de la bride 18' à un dispositif de récupération des poussières comprenant un cyclone et un filtre absolu. Ces dispositifs étant extrêmement classiques pour l'homme de l'art, ils ne seront pas décrits davantage et n'ont pas été représentés en figure 1.

Les pastilles de combustible nucléaire 35 de forme cylindrique, sont introduites dans le dispositif de dépoussiérage au moyen d'un poussoir ou de tout autre dispositif classique de façon à circuler en colonne à l'intérieur du tube de dépoussiérage 1. De façon avantageuse, on peut placer à l'entrée du dispositif de dépoussiérage un V de guidage permettant d'introduire plus facilement les pastilles 35 à l'intérieur du tube 11. Un dispositif similaire peut être installé à la sortie au niveau du tube de récupération 33' des pastilles 35, afin de guider les pastilles dépoussiérées vers une autre partie du dispositif, par exemple un dispositif d'engainage. Le V de guidage et le poussoir n'ont pas été représentés sur la figure 1. Enfin, l'ensemble du dispositif peut être monté sur un bâti, (également non représenté).

La chambre d'injection de gaz 15 est cylindrique de manière à assurer un équilibre de la répartition du gaz circulant, provenant du conduit d'injection 17, en direction des six rainures hélicoïdales 3. Le gaz pénètre sous pression à l'intérieur du tube de dépoussiérage 1 en passant par l'orifice annulaire 38. Il est ensuite véhiculé à l'intérieur des rainures hélicoïdales 3. Ceci a pour effet de créer un flux de gaz laminaire circulant à vitesse très élevée à l'intérieur du tube de dépoussiérage 1. Cette vitesse doit être au moins de 25 m/s et de préférence comprise entre 25 et 35 m/s. Ce flux de gaz est parallèle et de même sens que le sens de déplacement des pastilles de combustible 35. C'est ce flux de gaz qui décroche les poussières ou les particules présentes sur la périphérie des pastilles de combustible 35. Ce dispositif garantit l'élimination des poussières ou de particules dont la dimension est supérieure à 2 µm. De façon similaire, l'embout de sortie 7 présente un passage annulaire 38' d'aspiration de gaz.

Pour augmenter l'efficacité de ce dispositif de dépoussiérage, on peut disposer plusieurs de ceux-ci en série. Il est également possible de faire effectuer plusieurs passages successifs aux pastilles de combustible, à l'intérieur de ce dispositif de dépoussiérage.

Enfin, bien que l'invention ait été décrite comme s'appliquant plus particulièrement au domaine industriel des pastilles de combustible nucléaire et des céramiques nucléaires, il peut également être utilisé pour dépoussiérer des pastilles réalisées dans d'autres matériaux et par exemple être utilisé dans les industries non nucléaires.

## Revendications

1. Dispositif de dépoussiérage de pastilles (35) de combustible nucléaire, comprenant un tube de dépoussiérage (1) à l'intérieur duquel circulent lesdites pastilles, caractérisé en ce que ce tube (1) est muni à son extrémité d'entrée (2) d'un orifice d'injection de gaz, d'une ouverture (13) d'introduction des pastilles et de moyens pour créer un flux de gaz laminaire de dépoussiérage, d'une vitesse d'au moins 25 m/s, autour des pastilles (35) circulant dans ledit tube, ce flux de gaz étant parallèle et de même sens que le sens de déplacement desdites pastilles et ledit tube de dépoussiérage (1) étant en outre muni à son extrémité de sortie (4) d'un orifice d'aspiration de gaz et des poussières et d'une ouverture de récupération des pastilles dépoussiérées.

2. Dispositif de dépoussiérage selon la revendication 1, caractérisé en ce qu'il comprend un embout d'entrée (5) constitué par un manchon cylindrique (9) dont l'une des extrémités (11) est fixée à l'extrémité d'entrée (2) du tube de dépoussiérage (1) et dont l'autre extrémité (13) définit l'ouverture d'introduction des pastilles, ce manchon cylindrique (9) présentant intérieurement une chambre d'injection de gaz (15) et comprenant un conduit d'injection de gaz (17) débouchant dans la chambre d'injection de gaz (15) sensiblement perpendiculairement à l'axe du tube de dépoussiérage (1).

3. Dispositif de dépoussiérage selon la revendication 1, caractérisé en ce qu'il comprend un embout de sortie (7), constitué par un manchon cylindrique (9) dont l'une des extrémités (11) est fixée à l'extrémité de sortie (4) du tube de dépoussiérage (1) et dont l'autre extrémité (13) définit l'ouverture de récupération des pastilles, ce manchon cylindrique (9) présentant intérieurement une chambre de collecte de gaz et comprenant un conduit d'aspiration de gaz (17') débouchant dans ladite chambre de collecte de gaz sensiblement perpendiculairement à l'axe du tube de dépoussiérage (1).

4. Dispositif de dépoussiérage selon la revendication 2, caractérisé en ce que l'embout d'entrée (5) est muni d'un tube d'introduction (33) des pastilles (35) pénétrant partiellement dans le manchon (9) et coaxialement à celui-ci de façon à traverser la chambre d'injection de gaz (15) et à ce que son extrémité d'introduction (37) pénètre à l'entrée (2) du tube de dépoussiérage (1), le diamètre extérieur de l'extrémité d'introduction (37) du tube d'introduction (33) de pastilles étant inférieur au diamètre interne du tube de dépoussiérage (1), de façon à définir avec celui-ci un passage annulaire (38) d'introduction de gaz.

5. Dispositif de dépoussiérage selon la revendication 3, caractérisé en ce que l'embout de sortie (7) est muni d'un tube de récupération (33') des pastilles (35) pénétrant partiellement dans le manchon (9) et coaxialement à celui-ci de façon à traverser la chambre de collecte de gaz et à ce que son extrémité d'introduction (37) pénètre dans la sortie (4) du tube de dépoussiérage (1), le diamètre extérieur de l'extrémité d'introduction (37) du tube de récupération (33) de pastille étant inférieur au diamètre interne du tube de dépoussiérage (1) de façon à définir avec celui-ci un passage annulaire d'aspiration de gaz.

6. Dispositif de dépoussiérage selon l'une quelconque des revendications précédentes, caractérisé en ce que le tube de dépoussiérage (1) est muni intérieurement d'au moins quatre cannelures (3) hélicoïdales s'étendant sur toute sa longueur.

7. Dispositif de dépoussiérage selon les revendications 1, 2, 4 et 6, caractérisé en ce que la chambre d'injection de gaz (15), le passage annulaire (38) et les cannelures hélicoïdales (3) forment les moyens permettant de créer le flux de gaz laminaire.

8. Dispositif de dépoussiérage selon la revendication 1, caractérisé en ce que la vitesse du flux de gaz laminaire est comprise entre 25 et 35 m/s.

9. Dispositif de dépoussiérage selon la revendication 2 ou 3, caractérisé en ce que les embouts d'entrée (5) et de sortie (7) sont fixés sur le tube de dépoussiérage (1) par un raccord à bride (19) et un raccord annulaire (31).

## Patentansprüche

1. Entstaubungsvorrichtung für Kernbrennstofftabletten (35), ein Entstaubungsrohr (1) umfassend, in dessen Innern besagte Tabletten zirkulieren,
**dadurch gekennzeichnet**, daß dieses Rohr (1) an seinem Eingangsende (2) versehen ist mit einer Gasinjektionsöffnung, einer Tabletteneinführungsöffnung (13) und mit Einrichtungen, um einen laminaren Entstaubungsgasfluß mit einer Geschwindigkeit von wenigstens 25 m/s zu erzeugen, um die in besagtem Rohr zirkulierenden Tabletten herum, wobei dieser Gasstrom mit der Fortbewegungsrichtung der Tabletten parallel und gleichgerichtet ist und das Entstaubungsrohr (1) außerdem an seinem Ausgangsende (4) versehen ist mit einer Ansaugöffnung für Gas und Stäube und einer Rückgewinnungsöffnung der entstaubten Tabletten.

2. Entstaubungsvorrichtung nach Anspruch 1,
dadurch gekennzeichnet, daß sie einen Ansatz 5 umfaßt, gebildet durch eine zylindrische Muffe (9), deren eines Ende (11) am Eingangsende (2) des Entstaubungsrohrs (1) befestigt ist und deren anderes Ende (13) die Einführungsöffnung der Tabletten definiert, wobei diese zylindrische Muffe (9) innen eine Gasinjektionskammer (15) aufweist und eine Gasinjektionsleitung (17) umfaßt, die in die Gasinjektionskammer (15) mündet, im wesentlichen senkrecht zu der Achse des Entstaubungsrohrs (1).

3. Entstaubungsvorrichtung nach Anspruch 1,
dadurch gekennzeichnet, daß sie einen Ausgangsansatz (7) umfaßt, gebildet durch eine zylindrische Muffe (9), deren eines Ende (11) am Ausgangsende (4) des Entstaubungsrohrs (1) befestigt ist, und deren anderes Ende (13) die Rückgewinnungsöffnung der Tabletten definiert, wobei diese zylindrische Muffe (9) innen eine Gas-Sammelkammer aufweist und eine Gas-Absaugleitung (17') umfaßt, die in besagte Gas-Sammelkammer mündet, im wesentlichen senkrecht zu der Achse des Entstaubungsrohrs (1).

4. Entstaubungsvorrichtung nach Anspruch 2,
dadurch gekennzeichnet, daß der Eingangsansatz (5) versehen ist mit einem Einführungsrohr (33) der Tabletten (35), das teilweise in die Muffe (9) eindringt, koaxial zu dieser, so daß es die Gasinjektionskammer (15) durchquert, und dadurch, daß sein Einführungsende (37) in den Eingang (2) des Entstaubungsrohrs (1) eindringt, wobei der Außendurchmesser des Einführungsendes (37) des Tabletteneinführungsrohrs (33) kleiner ist als der Innendurchmesser des Entstaubungsrohrs (1) und derart mit diesem einen ringförmigen Gasinjektionsdurchlaß (38) bildet.

5. Entstaubungsvorrichtung nach Anspruch 3,
dadurch gekennzeichnet, daß der Ausgangsansatz (7) versehen ist mit einem Rückgewinnungsrohr (33') der Tabletten (35), das teilweise eindringt in die Muffe (9), koaxial zu dieser, so daß es die Gas-Sammelkammer durchquert, und dadurch, daß sein Einführungsende eindringt in den Ausgang (4) des Entstaubungsrohrs (1), wobei der Außendurchmesser des Einführungsendes (37) des Tablettenrückgewinnungsrohrs (33) kleiner ist als der Innendurchmesser des Entstaubungsrohrs (1) und derart mit diesem einen ringförmigen Gasabsaugdurchlaß bildet.

6. Entstaubungsvorrichtung nach einem der vorangehenden Ansprüche, dadurch gekennzeichnet, daß das Entstaubungsrohr (1) innen mit wenigstens vier spiralförmigen Rillen (3) versehen ist, die sich über seine gesamte Länge erstrecken.

7. Entstaubungsvorrichtung nach den Ansprüchen 1, 2, 4 und 6,
dadurch gekennzeichnet, daß die Gasinjektionskammer (15), der ringförmige Durchlaß (38) und die spiralförmigen Rillen (3) die Mittel bzw. Einrichtungen bilden, die ermöglichen, den laminaren Gasfluß zu erzeugen.

8. Entstaubungsvorrichtung nach Anspruch 1,
dadurch gekennzeichnet, daß die Geschwindigkeit des laminaren Gasflusses enthalten ist zwischen 25 und 35 m/s.

9. Entstaubungsvorrichtung nach dem Anspruch 2 oder 3,
dadurch gekennzeichnet, daß der Eingangsansatz (5) und der Ausgangsansatz (7) auf dem Entstaubungsrohr (1) durch eine Flanschverbindungg (19) und ein ringförmiges Verbindungsstück (31) befestigt sind.

## Claims

1. Nuclear fuel pellet (35) dedusting device including a dedusting tube (1) inside which said pellets circulate, characterized in that this tube (1) is provided at its inlet extremity (2) with a gas injection orifice, a pellet introduction opening (13), and means for creating a laminar dedusting flow of gas with a speed of at least 25 m/s around the pellets (35) circulating in said tube, this gas flow being parallel and having the same direction as the direction of movement of said pellets, said dedusting tube (1) being further provided at its outlet extremity (4) with a gas and pellets suction orifice and an opening for recovering the dedusted pellets.

2. Dedusting device according to claim 1, characterized in that it includes an inlet joining piece (5) constituted by a cylindrical sleeve (9) with one of its extremities (11) being fixed to the inlet extremity (2) of the dedusting tube (1) and the other extremity (13) defining the pellet introduction opening, this cylindrical sleeve (9) internally having a gas injection chamber (15) and including a gas injection pipe (17) opening into the gas injection chamber (15) approximately perpendicular to the axis of the dedusting tube.

3. Dedusting device according to claim 1, characterized in that it includes an outlet joining piece (7) constituted by a cylindrical sleeve (9) with one of its extremities (11) being fixed to the outlet extremity (4) of the dedusting tube (1) and the other (13) defining the opening for recovering the pellets, this cylindrical sleeve (9) internally having a gas collection chamber and including a gas suction pipe (17') opening into said gas collection chamber approximately perpendicular to the axis of the dedusting tube (1).

4. Dedusting device according to claim 2, characterized in that the inlet joining piece (5) is provided with a pellet (35) introduction tube (33) penetrating partially into the sleeve (9) and coaxially to the latter so as to traverse the gas injection chamber (15) and in that its introduction extremity (37) penetrates at the inlet (2) of the dedusting tube (1), the outer diameter of the introduction extremity (37) of the pellet introduction tube (33) being smaller than the internal diameter of the dedusting tube (1) so as to define with the latter an annular passage (38) for introducing the gas.

5. Dedusting device according to claim 3, characterized in that the outlet joining piece (7) is provided with a pallet (35) recovery tube (33') penetrating partially into the sleeve (9) and coaxially to the latter so as to traverse the gas collection chamber and in that its introduction extremity (37) penetrates into the outlet (11) of the dedusting tube (1), the outer diameter of the introduction extremity (37) of the pellet recovery tube (33) being smaller than the internal diameter of the dedusting tube so as to define with the latter an annular passage for sucking up the gas.

6. Dedusting device according to any one of the preceding claim s, characterized in that the dedusting tube (1) is internally provided with at least four helical grooves (3) extending over its entire length.

7. Dedusting device according to claims 1, 2, 4 and 6, characterized in that the gas injection chamber (15), the annular passage (38) and the helical grooves (3) form means able to create the laminar gas flow.

8. Dedusting device according to claim 1, characterized in that the speed of the laminar gas flow is between 25 and 35 m/s.

9. Dedusting device according to claim 2 or 3, characterized in that the inlet (5) and outlet (7) joining pieces are secured to the dedusting tube (1) by a flange connector (19) and an annular connector (31).
